(19) Europäisches Patentamt
European Patent Office
Office européen des brevets

(11) **EP 1 510 964 B1**

(12) **EUROPÄISCHE PATENTSCHRIFT**

(45) Veröffentlichungstag und Bekanntmachung des Hinweises auf die Patenterteilung:
**17.05.2006 Patentblatt 2006/20**

(51) Int Cl.:
**G06K 9/48** *(2006.01)*    **G06K 9/64** *(2006.01)*

(21) Anmeldenummer: **04015595.4**

(22) Anmeldetag: **02.07.2004**

(54) **Verfahren zur optischen Erkennung von alphanumerischen Zeichen**

Method for optical recognition of alphanumeric characters

Procédé de reconnaissance optique pour des charactères alphanumériques

(84) Benannte Vertragsstaaten:
**AT BE BG CH CY CZ DE DK EE ES FI FR GB GR HU IE IT LI LU MC NL PL PT RO SE SI SK TR**

(30) Priorität: **18.08.2003 DE 10337831**

(43) Veröffentlichungstag der Anmeldung:
**02.03.2005 Patentblatt 2005/09**

(73) Patentinhaber: **SICK AG**
**79183 Waldkirch (DE)**

(72) Erfinder:
• **Reichenbach, Jürgen**
**79312 Emmendingen (DE)**
• **Nübling, Achim**
**79312 Emmendingen (DE)**
• **Schopp, Thomas**
**79112 Freiburg (DE)**

(74) Vertreter: **Ludewigt, Christoph**
**Sick AG,**
**Intellectual Property,**
**Sebastian-Kneipp-Strasse 1**
**79183 Waldkirch (DE)**

(56) Entgegenhaltungen:
**US-A- 5 048 099**

• **LATECKI L J ET AL: "SHAPE SIMILARITY MEASURE BASED ON CORRESPONDENCE OF VISUAL PARTS" IEEE TRANSACTIONS ON PATTERN ANALYSIS AND MACHINE INTELLIGENCE, IEEE INC. NEW YORK, US, Bd. 22, Nr. 10, Oktober 2000 (2000-10), Seiten 1185-1190, XP000976550 ISSN: 0162-8828**
• **KAUP A ET AL: "Polygonal shape descriptors - an efficient solution for image retrieval and object localization" CONFERENCE RECORD OF THE THIRTY-FOURTH ASILOMAR CONFERENCE ON SIGNALS, SYSTEMS AND COMPUTERS, Bd. 1, 29. Oktober 2000 (2000-10-29), Seiten 59-64, XP010535335**

**Beschreibung**

Die Erfindung betrifft ein Verfahren zur optischen Erkennung von alphanumerischen Zeichen.

Die optische Erkennung von alphanumerischen Zeichen, die üblicherweise als Optical Character Recognition (OCR) bezeichnet wird, dient dazu, schriftliche gedruckte oder wünschenswerterweise auch handschriftliche Texte automatisch in eine Datenform zu übertragen, die mittels einer elektronischen Datenverarbeitung bearbeitet werden kann. Die zu erkennenden Zeichen werden optisch abgetastet und binarisiert, so dass eine Datei erzeugt wird, die mittels einer geeigneten Software analysiert und in einen rechnerkompatiblen Datensatz umgewandelt wird.

Bisher ist es bekannt, insbesondere genormte Zeichen, sogenannte OCR-Schriften zu verwenden, die einen Vergleich mit gespeicherten Referenzzeichen erleichtern. Dieser Vergleich wird nach verschiedenen Verfahren durchgeführt.

Bei dem sogenannten Pattern Matching wird das durch die optische Abtastung erfasste Zeichenmuster mit abgespeicherten Referenzzeichen durch Musterüberlagerung verglichen, um die bestmögliche Übereinstimmung zu ermitteln. Dieses Verfahren ist äußerst problematisch, wenn unterschiedliche Schriften, Zeichengrößen und Zeichenausprägungen erkannt werden sollen.

Bei dem sogenannten Feature Recognition Verfahren werden den Zeichen gewisse charakteristische Merkmale zugeordnet, wie senkrechte und waagrechte Striche, Kreuzungspunkte und Bögen. Die zu erkennenden Zeichen werden auf diese Merkmale hin untersucht und mit den gespeicherten Musterformen verglichen. Dieses Verfahren ist somit weniger abhängig von Schriftart und/oder Größe und somit zuverlässiger.

Bei der sogenannten Winkelschnittanalyse wird das zu erkennende Zeichen in unterschiedlichen Winkeln von einer Geradenschar geschnitten. Die Anzahl der Schwärzungspunkte auf den jeweiligen Geraden sowie die Anzahl der Schnittpunkte der Geraden mit dem zu erkennenden Zeichen werden analysiert und rechnerisch mit den gespeicherten Referenzzeichen verglichen.

Aus dem Vortrag von Dr. Rolf Lakämper mit dem Titel "The ASR-algorithm (Advanced Shape Recognition)" vom 15.04.2002, gehalten an der Temple University, Philadelphia dessen abstract im Internet unter www.cis.temple.edu/general/colloquiums.html abrufbar ist, ist ein Verfahren bekannt zur Bildverarbeitung. Dieser Algorithmus basiert auf einer Konturerkennung von zweidimensionalen Objekten. Entwickelt wurde der Algorithmus für die Robotik. Mit Hilfe von zwei Algorithmen werden die Objekte in einem ersten Schritt durch einen Polygonzug abstrahiert und in einem zweiten Schritt in einen Tangenten-Raum transformiert.

In einer weiteren Veröffentlichung von Longin Jan Latecki und Rolf Lakämper "Shape Similarity Measure Based on Correspondence of Visual Parts" IEEE Transactions on Pattern Analysis and Machine Intelligence, IEEE Inc New York, US Bd. 22, Nr. 10, Oktober 2000, ist eine Methode beschrieben zur Erfassung von zweidimensionalen Objekten. Die Objekte werden dabei durch Polygonzüge vereinfacht dargestellt. Polygon-Eckpunkte mit geringer Relevanz werden dabei eliminiert. Zur dentifikation der Objekte wird ein Polygonzug in einen Tangenten-Raum transformiert.

Aus der US 5 048 099 ist ein Verfahren zur Erkennung von gedrucktem Text innerhalb eines umrandeten Bereichs bekannt. Mit Hilfe des Verfahrens wird die Umrandung identifiziert. Die Umrandung muss dabei eine geschlossene Kurve bilden. Dabei wird festgestellt ob die Kurve oder der von der Kurve eingeschlossene Text äußere Konturen und innere Konturen aufweist. Aufgrund von Merkmalen der inneren und äußeren Kontur kann ermittelt werden, ob es sich um eine Textumrandung handelt. Das Verfahren wird angewendet, um manuell markierte Textpassagen zu extrahieren.

Diese bekannten Verfahren sind stark davon abhängig, dass die zu erkennenden Zeichen in einer genormten Schrift vorliegen oder einer solchen genormten Schrift möglichst gut angenähert sind.

Der Erfindung liegt die Aufgabe zu Grunde, ein Verfahren zur optischen Erkennung von alphanumerischen Zeichen zur Verfügung zu stellen, welches eine verbesserte Erkennungsfähigkeit aufweist, die sich stärker der menschlichen Abstraktionsfähigkeit von Ähnlichkeitsmerkmalen annähert.

Diese Aufgabe wird erfindungsgemäß gelöst durch ein Verfahren mit den Merkmalen des Anspruchs 1.

Vorteilhafte Ausbildungen der Erfindung sind in den jeweils rückbezogenen Unteransprüchen angegeben.

Die Erfindung geht von einem Verfahren aus, welches unter der Bezeichnung Advanced Shape Recognition (ASR) bekannt ist. Dieses Verfahren wird z.B. in der Automatisierungstechnik für eine positionsunabhängige Teileerkennung eingesetzt. Bei diesem Verfahren wird die Außenkontur eines Teiles abgetastet und zunächst durch einen Polygonzug approximiert. Der Polygonzug wird in den Tangentenraum transformiert, d.h. in eine Kurve umgesetzt, die durch die Länge und den Winkel der jeweils aufeinanderfolgenden Geradenstücke des Polygons definiert ist. Die so ermittelte Kurve des abgetasteten Teiles wird mit gespeicherten Referenzkurven ver glichen, die die Außenkonturen der zu unterscheidenden Teile wiedergeben. Dieses bekannte Verfahren hat den Vorteil, dass der Vergleich positionsunabhängig erfolgen kann, da die Kurve im Tangentenraum rotationsinvariant ist. Eine Drehung des Teiles und seiner Außenkontur entspricht einer Linearverschiebung der Kurve im Tangentenraum. Durch eine gegenseitige Verschiebung der abgetasteten Kurve mit der Referenzkurve können diese Kurven für den Vergleich zur Deckung gebracht werden.

Das an sich bekannte ASR-Verfahren wird erfindungsgemäß für die Erkennung von alphanumerischen Zeichen abgewandelt und weiterentwickelt. Hierzu werden die in der Datenbank abgelegten Referenzkurven, die den Referenzzeichen entsprechen, und ebenso die durch Abtastung der zu erkennenden Zeichen erzeugten Zeichenkurven im Tangentenraum normiert. Diese Normierung bedeutet, dass die Polygonzüge der Referenzkurve und der Zeichenkurve auf dieselbe Länge gebracht werden. Diese Normierung der Kurven im Tangentenraum entspricht einer linearen Vergrößerung bzw. Verkleinerung des Polygonzuges und damit der Kontur des zu erkennenden Zeichens. Durch diese Normierung wird die Zeichenerkennung unabhängig von der Schriftgröße der zu erkennenden Zeichen.

Weiter wird erfindungsgemäß nicht nur die Außenkontur der alphanumerischen Zeichen ausgewertet, sondern auch deren Innenkonturen. Die Außenkontur und die Innenkonturen der Referenzenzeichen werden in der Datenbank als Satz von Referenzkurven im Tangentenraum abgelegt. Entsprechend werden bei dem zu erkennenden Zeichen die Außenkontur und die Innenkonturen erfasst und in entsprechende Zeichenkurven im Tangentenraum transformiert. Die Anzahl und Form der Innenkonturen sowie ihre geometrische Positionszuordnung zur Außenkontur stellen ein für die Zeichenerkennung wichtiges zusätzliches Merkmal der alphanumerischen Zeichen dar. Es gibt Zeichen, die nur eine Außenkontur und keine Innenkontur aufweisen, z.B. den Buchstaben **I** oder die Ziffer **2**. Weiter gibt es Zeichen mit nur einer Innenkontur, z.B. den Buchstaben **P** oder die Ziffer **9**. Schließlich gibt es Zeichen mit zwei Innenkonturen, z.B. den Buchstaben **B** oder die Ziffer **8**. Ein Satz von Referenzkurven eines Referenzzeichen besteht somit in jedem Fall aus einer Referenzkurve der Außenkontur und zwei Referenzkurven der Innenkonturen, wobei keine, eine oder beide Referenzkurven der Innenkonturen einen Polygonzug wiedergeben.

Weist ein Zeichen eine oder zwei Innenkonturen auf, so sind die Kurven der Außenkontur und der Innenkonturen in ihrer Zuordnung rotationsinvariant, wie dies der vorgegebenen festen geometrischen Zuordnung der Innenkonturen und der Außenkontur des Zeichens entspricht. Bei dem Vergleich der Kurven ist es somit ausreichend, die Zeichenkurve der Außenkontur und die Referenzkurve der Außenkontur gegeneinander zu verschieben, um die Zeichenähnlichkeit zu prüfen. Wenn die normierten Kurven der Außenkontur durch Linearverschiebung im Tangentenraum, d.h. Rotation der Polygonzüge zur Deckung gebracht werden, werden zwangsweise auch die Kurven der Innenkonturen zur Deckung gebracht. Dies vereinfacht die Rechenvorgänge für die Vergleichsoperation.

In der Regel werden somit nur die Kurven der Außenkonturen verwendet, um die Zeichenkurve mit den Referenzkurven zur Deckung zu bringen. Für den Ähnlichkeitsvergleich, d.h. für die Bestimmung der Abweichungen zwischen den Zeichenkurven und den Referenzkurven werden dagegen sowohl die Kurven der Außenkonturen als auch die Kurven der jeweils vorhandenen Innenkonturen verwendet. Dadurch ergibt sich die höhere Zeichenerkennungsfähigkeit des erfindungsgemäßen Verfahrens.

Es ist selbstverständlich auch möglich, zusätzlich zu den Kurven der Außenkontur auch die Kurven der Innenkonturen dazu zu verwenden, die Zeichenkurven mit den Referenzkurven für den Ähnlichkeitsvergleich zur Deckung zu bringen. Dies verbessert die Zeichenerkennung vor allem bei Störungen im Zeichenabdruck. Da dieses Vorgehen jedoch mit einem höheren Rechenaufwand verbunden ist, wird in der Regel das Verschieben der Kurven der Außenkontur als ausreichend anzusehen sein, um die Kurven für den Ähnlichkeitsvergleich zur Deckung zu bringen.

Um die Zeichenerkennung von Ungenauigkeiten in der Zeichendarstellung bzw. dem Zeichenabdruck und von geringen Verzerrungen und Verformungen der Zeichen unabhängiger zu machen, werden vorzugsweise die approximierten Polygonzüge der abgetasteten zu erkennenden Zeichen durch ein Ausgleichsverfahren vereinfacht. Dieses Ausgleichsverfahren entspricht einer gewissen Abstrahierung der Zeichenform und führt zu einer erheblichen Reduzierung der zu verarbeitenden Datenmenge.

Eine weitere Vereinfachung kann dadurch erreicht werden, dass gewisse Polygonabschnitte, d.h. mehrere aufeinanderfolgende Geradenstücke des Polygonzuges zu einem Polygonbogen des Zeichens zusammengefasst werden und diese Polygonbögen für den Ähnlichkeitsvergleich herangezogen werden. Auch hierdurch wird eine Reduzierung der Datenmenge und des Rechenaufwandes möglich.

Die wesentlichen Vorteile des erfindungsgemäßen Verfahrens bestehen somit darin, dass die Zeichenerkennung und der Vergleich mit den Referenzeichen invariant ist gegen Rotation und Skalierung, d.h. unabhängig ist von der Position und Ausrichtung des zu erkennenden Zeichens und dessen Größe.

Weiter ergibt sich eine geringere Abhängigkeit des Zeichenvergleichs von Verzerrungen und Verformungen der Zeichendarstellung und von Störungen und Ungenauigkeiten im Zeichenabdruck. Der Vergleich von Außenkontur und Innenkonturen ergibt eine höhere Erkennungsfähigkeit der alphanumerischen Zeichen. Die Tangentenkurve als Charakteristikum für die Zeichenform kommt dem menschlichen Abstraktionsvermögen bei der Formerkennung am nächsten, was eine größere Unabhängigkeit von der Schriftform bedeutet. Das Verfahren kann daher vielseitiger eingesetzt werden und ergibt eine höhere Zuverlässigkeit in der Zeichenerkennung.

Im folgenden wird die Erfindung an Hand eines Ausführungsbeispiels näher erläutert. Dabei zeigen in der beigefügten Zeichnung

Figur 1      die Transformation eines zweidimensionalen Polygons in den Tangentenraum,

Figur 2 das Prinzip des Stufenausgleichs,

Figur 3 den Formvergleich eines zu erkennenden Zeichens mit einem Referenzzeichen,

Figur 4 die Zerlegung eines Polygons in Bögen und

Figur 5 die Transformation eines alphanumerischen Zeichens mit Außenkontur und Innenkontur in den Tangentenraum.

Ziel der Erfindung ist es, alphanumerische Zeichen, d.h. insbesondere Buchstaben und Ziffern automatisch optisch zu erfassen und zu erkennen. Die zu erkennenden Zeichen können dabei in einer beliebigen räumlichen Anordnung vorliegen, wie dies beispielsweise der Fall ist, wenn Aufschriften auf ungeordnet vorliegenden Objekten identifiziert werden müssen.

Hierzu müssen zunächst die zu identifizierenden Zeichen erfasst werden. Eine Scan-Einrichtung wird auf die zu ermittelnden Zeichen ausgerichtet und fokussiert. Das gesamte Bild der zu identifizierenden Zeichen wird dann mittels einer Kamera zeilenweise oder zweidimensional matrixweise aufgenommen und für die weitere rechnerische Verarbeitung in einen binären Datensatz umgewandelt.

Anschließend muß in der Regel das Gesamtbild der zu identifizierenden Zeichen segmentiert werden, d.h. die in dem Gesamtbild enthaltenen einzelnen alphanumerischen Zeichen müssen voneinander unterschieden und als Einzelzeichen identifiziert werden. Diese Verfahrensschritte sind an sich bekannt.

Zur Erkennung der auf diese Weise digitalisiert und segmentiert vorliegenden alphanumerischen Zeichen wird der nachfolgend beschriebene Algorithmus verwendet.

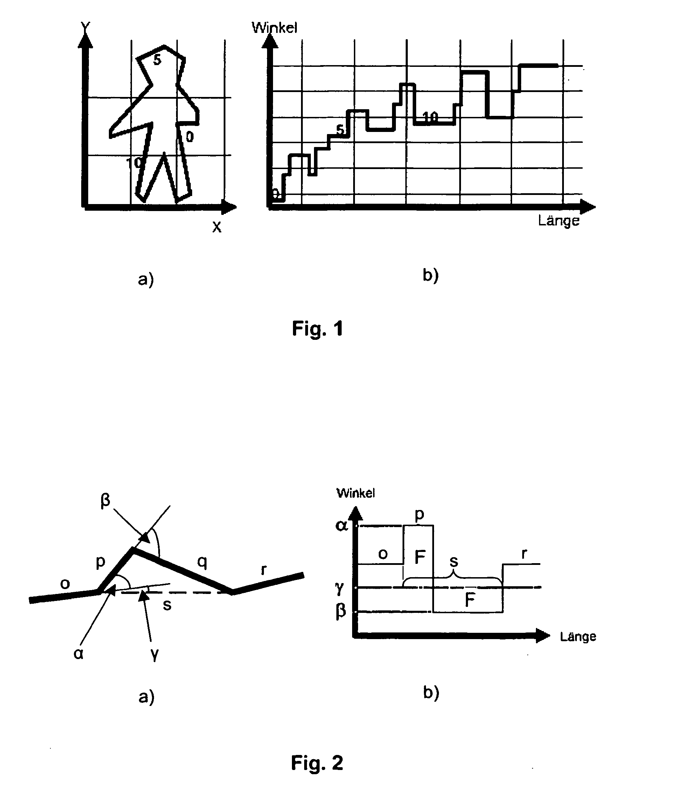

Zunächst werden die Außenkontur sowie die eventuell vorhandenen ein oder zwei Innenkonturen des zu erkennenden Zeichens durch ein geschlossenes Polygon approximiert. Die Polygonzüge der Außenkontur und der Innenkonturen werden dann in den Tangentenraum transformiert, wie dies in Figur 1 am Beispiel eines Polygons erläutert ist, welches einer menschlichen Figur ähnelt. Der in Figur 1 a in der X-Y-Ebene dargestellte Polygonzug wird in seine einzelnen Geradenstücke zerlegt. Die im Gegenuhrzeigersinn aufeinanderfolgenden Geradenstücke werden beginnend z.B. mit der Startnummerierung 0 in der rechten Achselhöhle durchnummeriert und jeweils durch die Länge des Geradenstückes und dessen Winkel gegenüber dem vorangehenden Geradenstück gekennzeichnet. In dem in Figur 1 b dargestellten Tangentenraum werden die aufeinanderfolgenden Geradenstücke in der Weise abgebildet, dass ihre Länge als Abszisse und der Winkel gegenüber dem vorangehendem Geradenstück als Ordinate aufgetragen werden. Da es sich um einen geschlossenen Polygonzug handelt, ergibt sich insgesamt ein Winkel von 360°, der als Sprung zwischen der Start-Geraden und der End-Geraden im Tangentenraum erscheint.

Die sich durch diese Transformation ergebende Zeichenkurve im Tangentenraum stellt somit eine umkehrbar eindeutige Abbildung der Form des Polygons in der zweidimensionalen Ebene der Figur 1a dar.

Um einen größenunabhängigen, d.h. skalierungsinvarianten Vergleich mit Referenzzeichen zu ermöglichen, wird die Gesamtlänge des Polygonzugs, d.h. die Länge der Zeichenkurve im Tangentenraum auf 1 normiert. Dies entspricht einer proportionalen Vergrößerung bzw. Verkleinerung der Konturen des zu erkennenden abgetasteten Zeichens auf eine normierte Einheitsgröße.

Die zu erkennenden Zeichen weisen in der Regel in ihrer Außenkontur und ihren Innenkonturen Störungen, Unregelmäßigkeiten und Fehler auf, die sich beim Abdruck bzw. bei dem Aufbringen der Zeichen ergeben. Diese Störungen und Ungenauigkeiten bilden in dem approximierten Polygonzug Geradenstücke und Eckpunkte, die nur relativ geringe Abweichungen gegenüber den anschließenden Geradenstücken aufweisen. Um den die Zeichenerkennung erschwerenden Einfluß solcher Störungen und Ungenauigkeiten zu reduzieren, wird vorzugsweise der nachfolgend beschriebene Stufenausgleich durchgeführt, der zu einer gewissen Abstraktion, d.h. Vereinfachung der Konturen des abgetasteten Zeichens und damit zu einer Vereinfachung der Zeichenkurven im Tangentenraum führt.

Für diesen Stufenausgleich wird ein Algorithmus verwendet, der die sogenannte "visuelle Relevanz" des jeweiligen Eckpunktes des Polygonzuges bewertet. Diese auch als "Evolution" bezeichnete Vereinfachung wird anhand des Beispiels der Figur 2 erläutert.

Ein Polygonabschnitt mit den Geradenstücken o, p, q, r der in Figur 2a dargestellt ist, weist einen durch die Geradenstücke p und q gebildeten Eckpunkt auf. Figur 2b zeigt die in den Tangentenraum transformierte Kurve dieses Polygonzugs.

Um die Wichtigkeit des durch die Geraden p und q gebildeten Eckpunkts für die visuelle Identifizierung des Zeichens zu bestimmen, werden die Geradenstücke p und q durch ein Geradenstück s ersetzt. Der Winkel $y$ zwischen dem Geradenstück o und dem Geradenstück s wird dabei so bestimmt, dass im Tangentenraum zwischen dem Geradenstück p und dem Geradenstück s sowie zwischen dem Geradenstück q und dem Geradenstück s jeweils eine gleich große Fläche F gebildet wird, wie dies in Figur 2b dargestellt ist. Die Fläche F ergibt sich im normierten Tangentenraum zu

$$F = \frac{[(\alpha - \beta)] \cdot p \cdot q}{p + q}$$

Wie sich aus dieser Formel erkennen lässt, kann sich ein großer Wert von F, d.h. eine hohe visuelle Relevanz sowohl durch eine starke Winkeländerung in dem Eckpunkt als auch durch lange Geradenstücke an diesem Eckpunkt ergeben.

Zur Vereinfachung des Polygonzugs wird zunächst der Eckpunkt des Polygonzugs mit der niedrigsten visuellen Relevanz ermittelt und in der beschriebenen Weise entfernt und durch ein Geradenstück ersetzt. Hierbei ändert sich zwangsläufig die visuelle Relevanz der zu diesem Eckpunkt benachbarten Eckpunkte. Deren visuelle Relevanz muss nun neu berechnet werden. Diese Schritte werden iterativ für alle Eckpunkte fortgesetzt, bis nur noch solche Eckpunkte verbleiben, deren visuelle Relevanz F über einem bestimmten Schwellwert liegt. Dieser Schwellwert wird nach zwei Bedingungen gewählt. Zum einen soll die Form des zu erkennenden Zeichens möglichst weitgehend vereinfacht werden, d.h. die für den nachfolgenden Formvergleich vorliegende Datenmenge soll möglichst reduziert werden, um den rechnerischen Aufwand in Grenzen zu halten. Zum anderen darf die Vereinfachung nicht die eindeutige Erkennbarkeit der Konturen beeinträchtigen. Ein diesen Forderungen gerecht werdender ausgewogener Schwellwert liegt bei ca. $0,3 < F < 0,5$.

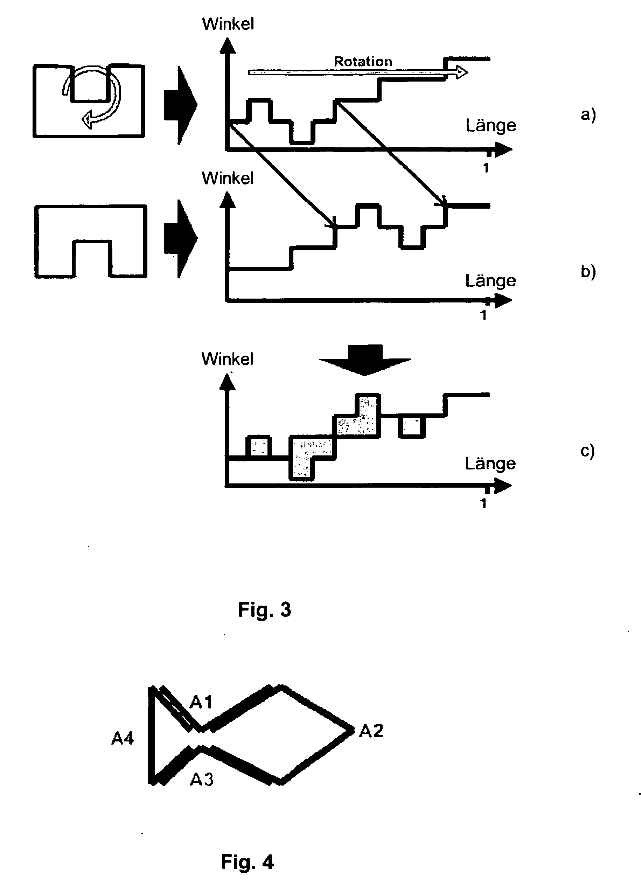

Die gegebenenfalls durch den vorstehend beschriebenen Stufenausgleich vereinfachten Zeichenkurven im Tangentenraum der erfassten zu erkennenden Zeichen werden anschließend mit normierten Referenzkurven verglichen, die als Abbildung von Referenzzeichen in einer Datenbank abgelegt sind. Der Vergleich erfolgt in der Figur 3 erläuterten Weise.

Figur 3a zeigt die in der vorstehenden Weise erfasste Außenkontur eines zu erkennenden Zeichens und deren in den Tangentenraum transformierte Zeichenkurve.

Figur 3b zeigt das entsprechende Referenzzeichen und dessen in der Datenbank abgelegte normierte Referenzkurve.

Es ist zu erkennen, dass in dem dargestellten Ausführungsbeispiel die Außenkontur des zu erkennenden Zeichens und die Außenkontur des Referenzzeichens übereinstimmen. Dementsprechend sind auch die Zeichenkurve des zu erkennenden Zeichens und die Referenzkurve im Tangentenraum formgleich. Durch die zufällige Anordnung des zur erkennenden Zeichens bei seiner optischen Erfassung ist dessen Ausrichtung jedoch gegenüber der Ausrichtung des Referenzzeichens verdreht. Diese unterschiedliche Lageorientierung von zu erkennendem Zeichen und Referenzzeichen entspricht einer Verschiebung von Zeichenkurve und Referenzkurve im Tangentenraum, wie dies durch einen Vergleich der Figuren 3a und 3b deutlich wird. Die erfasste Zeichenkurve und die jeweiligen in der Datenbank abgelegten Referenzkurven werden nun für den Formvergleich rechnerisch übereinandergelegt, wie dies in Figur 3c dargestellt ist. Die zwischen der Zeichenkurve und der jeweiligen Referenzkurve eingeschlossene Fläche ist dabei ein Maß für die Ähnlichkeit der beiden Kurven. In Figur 3c ergibt sich eine relativ große Fläche zwischen der Zeichenkurve und der Referenzkurve, was einer geringen Ähnlichkeit entspricht. Die Zeichenkurve und die Referenzkurve werden nun im Tangentenraum rechnerisch so gegeneinander verschoben, bis die zwischen diesen Kurven eingeschlossene Fläche ein Minimum erreicht. Diese Verschiebung der Kurven im Tangentenraum entspricht einer Rotation der Zeichenkonturen, wie dies in Figur 3a jeweils durch einen Pfeil dargestellt ist.

Das auf diese Weise ermittelte Minimum der Fläche zwischen der Zeichenkurve des abgetasteten zu erkennenden Zeichens und der jeweiligen Referenzkurve wird als Maß für die Abweichung des zu erkennenden Zeichens von dem jeweils verglichenen Referenzzeichen verwendet. Dasjenige Referenzzeichen, bei welchem diese Abweichung den kleinsten Wert annimmt, d.h. die ermittelte minimale Fläche zwischen Zeichenkurve und Referenzkurve am kleinsten ist, wird als erkanntes Zeichen bestimmt.

Eine weitere Ausführung der Erfindung wird anhand der Figur 4 erläutert.

Wie Figur 4 zeigt, wird der die Kontur des Zeichens darstellende Polygonzug in einzelne Polygonbögen zerlegt. Dabei werden jeweils die aufeinanderfolgenden Geradenstücke des Polygonzuges zu einem Polygonbogen zusammengefasst, bei welchen die Geradenstücke jeweils einen Winkel in derselben Drehrichtung gegenüber dem vorhergehenden Geradenstück aufweisen. Der Polygonzug wird daher in Polygonbögen zerlegt, die aufeinanderfolgend abwechselnd konkav und konvex sind. In Figur 4 ist z.B. der Polygonbogen A1 konkav ausgebildet, d.h. bei einem Durchlaufen des Polygons im Uhrzeigersinn ändert sich der Winkel der Geradenstücke im Gegenuhrzeigersinn. Der sich anschließende Polygonbogen A2 ist dagegen nach außen konvex ausgebildet, d.h. der Winkel zwischen den aufeinanderfolgenden Geradenstücken ändert sich im Uhrzeigersinn. Entsprechend ist der Polygonbogen A3 wieder konkav und der Polygonbogen A4 wieder konvex ausgebildet.

Bei dem Vergleich der Kurvenformen im Tangentenraum werden in dieser Ausführung jeweils die einzelnen Polygonbögen des abgetasteten zu erkennenden Zeichens mit den Polygonbögen der in der Datenbank abgelegten Referenzzeichen verglichen. Wie in der Figur 4 zu erkennen ist, werden die Geradenstücke beim Übergang zwischen den konkaven und konvexen Bogenabschnitten jeweils zweimal bewertet, einmal als Endgeradenstück des vorangehenden Polygonbogens und zum anderen als Anfangsgeradenstück des folgenden Polygonbogens.

Als richtiges Zeichen wird bei dem Formvergleich dasjenige Referenzzeichen erkannt, bei welchem die Summe der Abweichungen der miteinander verglichenen einzelnen Polygonbögen am kleinsten ist.

Die Bewertung der Zeichenähnlichkeit anhand der aufeinander folgenden konkaven und konvexen Polygonbögen führt zu einer stärkeren Anpassung des Formvergleichs an das menschliche Abstraktionsvermögen und die menschliche Formvorstellung. Es können mit einer höheren Selektivität auch Zeichen richtig erkannt werden, die gegenüber den Referenzzeichen stärker verschoben oder verzerrt sind, sofern sie mit dem Referenzzeichen in der Abfolge von konvexen und konkaven Bogenabschnitten ausreichend gut übereinstimmen. Verschiebungen und Winkelverdrehungen einzelner Bogenabschnitte gegeneinander haben einen geringeren Einfluss auf die Zeichenerkennung, da die Formerkennung der einzelnen Bogenabschnitte durch die zweifache Bewertung der überlappenden End- und Anfangsgeradenstücke gewissermaßen voneinander entkoppelt ist.

Erfindungsgemäß werden die Zeichen durch jeweils drei Konturen definiert. Eine Außenkontur ist bei jedem alphanumerischen Zeichen vorhanden. In der Anzahl der Innenkonturen unterscheiden sich die Zeichen. Es gibt Zeichen, die keine Innenkontur aufweisen, andere Zeichen, die nur eine Innenkontur aufweisen, und schließlich Zeichen, die zwei Innenkonturen aufweisen. Zu den Referenzzeichen sind in der Datenbank jeweils drei Konturen abgelegt, eine Referenzkurve für die Außenkontur und zwei Referenzkurven für die Innenkonturen. Bei den Zeichen, die keine oder nur eine Innenkontur aufweisen, ergibt sich jeweils eine durchgehende horizontale Gerade für die nicht vorhandenen Innenkonturen.

Bei den zu erfassenden Zeichen werden jeweils die Außenkontur und soweit vorhanden die Innenkonturen ermittelt. Bei dem Formvergleich der Zeichenkurven und der Referenzkurven im Tangentenraum werden dann nicht nur die Außenkonturen verglichen, sondern auch die Innenkonturen. Die optimale Ähnlichkeit ergibt sich damit dann, wenn die Gesamtabweichungen der Außenkontur und der Innenkonturen am geringsten ist. Weist ein zu erkennendes Zeichen im Vergleich zu einem Referenzzeichen eine abweichende Anzahl von Innenkonturen auf, so ergibt sich bei dem Vergleich durch die bei einem der Zeichen fehlende Innenkontur eine starke Abweichung, selbst wenn sich die Außenkonturen der Zeichen nicht all zu stark unterscheiden.

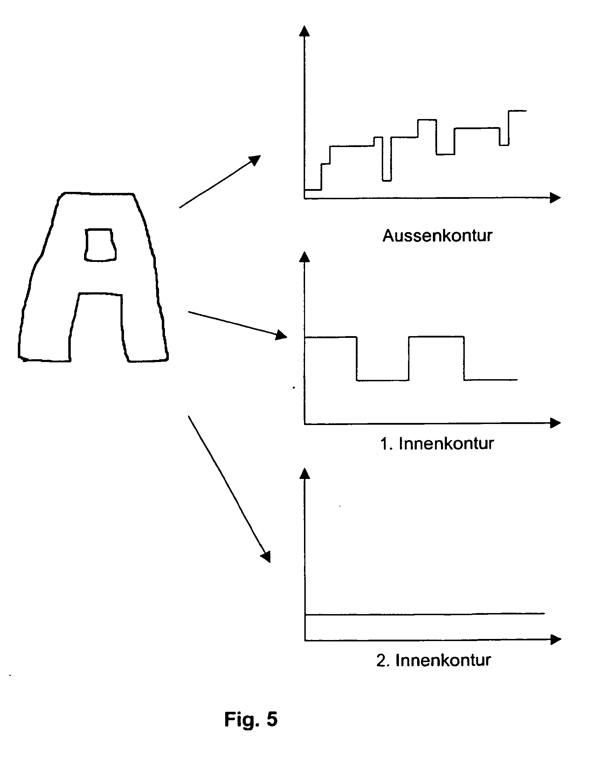

Figur 5 zeigt die Transformation des Buchstaben A in drei Zeichenkurven im Tangentenraum. Da der Buchstabe A nur eine Innenkontur aufweist, ergibt sich für die zweite Innenkontur eine "Nullkurve" für den Formvergleich mit den Referenzkurven.

Da bei den alphanumerischen Zeichen die Innenkontur eine feste geometrische Position in Bezug auf die Außenkontur aufweist, ist es bei dem Formvergleich der zu erkennenden Zeichen mit den Referenzzeichen zunächst nur notwendig, in der anhand von Figur 3 beschriebenen Weise die Außenkonturen der miteinander zu vergleichenden Zeichen zur Deckung zu bringen, d.h. die Zeichenkurve der Außenkontur mit der Referenzkurve der Außenkontur zur Deckung zu bringen. Bei dieser Rotation der Zeichen bzw. der Verschiebung der Kurven im Tangentenraum werden zwangsläufig die Innenkonturen in gleicher Weise zur Deckung gebracht. Eine Bestimmung der Abweichungen wird erst dann für alle drei Kurven durchgeführt, wenn die Außenkonturen zur Deckung gebracht sind. Selbstverständlich ist es auch möglich, bereits bei der anhand von Figur 3 beschriebenen Rotation der Zeichen sowohl die Außenkontur als auch die Innenkonturen dazu zu verwenden, die Zeichenkurven und die Referenzkurven zur Deckung zu bringen. Dies kann zu einer höheren Genauigkeit der Zeichenerkennung führen, bedeutet jedoch auch einen größeren Aufwand in der Datenverarbeitung.

**Patentansprüche**

1. Verfahren zur optischen Erkennung von alphanumerischen Zeichen mit folgenden Schritten:

   a) in einer Datenbank werden die polygonalen Außenkonturen und Innenkonturen von Referenzzeichen und deren gegenseitige geometrische Positionszuordnung als in den Tangentenraum transformierte und normierte Referenzkurven abgelegt;
   b) die Außenkontur und die Innenkonturen eines zu erkennenden Zeichens werden optisch abgetastet und in binäre Daten umgewandelt;
   c) die Außenkontur und die Innenkonturen des zu erkennenden Zeichens werden durch ein Polygon approximiert, dessen Geradenstücke zur Erzeugung von Zeichenkurven in den Tangentenraum transformiert und normiert werden;
   d) um die zu erkennenden Zeichen mit den Referenzzeichen rotationsinvariant zu vergleichen, werden zumindest die Zeichenkurve der Außenkontur und die Referenzkurven der Außenkonturen im Tangentenraum gegeneinander verschoben, bis die zwischen der Zeichenkurve und der jeweiligen Referenzkurve eingeschlossene Fläche ein Minimum erreicht;
   e) die dann ermittelte Fläche zwischen den Zeichenkurven für Außenkontur und Innenkonturen des zu erkennenden Zeichens und den jeweiligen Referenzkurven für Außenkonturen und Innenkonturen der Referenzzeichen wird als Maß für die Abweichung zwischen dem Zeichen und dem jeweiligen Referenzzeichen verwendet und dasjenige Referenzzeichen, bei dem diese Abweichung am kleinsten ist, wird als erkannt festgelegt, **dadurch gekennzeichnet, dass** die Gesamtabweichungen von Außenkontur und von Innenkonturen dazu verwendet werden, um die Zeichenkurve und die Referenzkurven rotationsinvariant zur Deckung zu bringen.

2. Verfahren nach Anspruch 1, **dadurch gekenn-**

zeichnet, dass die Referenzzeichen und die zu erkennenden Zeichen jeweils durch eine Außenkontur und zwei Innenkonturen definiert werden, die für die Zeichenerkennung verglichen werden, wobei bei den jeweiligen Zeichen gegebenenfalls nicht vorhandene Innenkonturen durch eine Gerade im Tangentenraum dargestellt werden.

**3.** Verfahren nach einem der vorhergehenden Ansprüche, **dadurch gekennzeichnet, dass** bei der Polygonapproximation der Konturen des zu erkennenden Zeichens ein Stufenausgleich angewendet wird, um Eckpunkte des Polygonzuges mit geringer visueller Relevanz zu eliminieren.

**4.** Verfahren nach einem der vorhergehenden Ansprüche, **dadurch gekennzeichnet, dass** die Polygonzüge der Konturen der Referenzzeichen und der zu erkennenden Zeichen in aufeinanderfolgende abwechselnd konkave und konvexe Polygonbögen zerlegt werden, dass der Ähnlichkeitsvergleich für die einzelnen Polygonbögen getrennt durchgeführt wird und dass als Maß für die Abweichung die Summe der Flächen verwendet wird, die zwischen den Zeichenkurven und den jeweiligen Referenzenkurven der einzelnen Polygonbögen eingeschlossen sind.

**Claims**

**1.** Method for optical recognition of alphanumeric characters, having the following steps:

a) in a database, the polygonal outer contours and inner contours of reference characters, and their mutually geometrical positional assignment are stored as normalized reference curves transformed into tangent space;
b) the outer contour and the inner contours of a character to be recognized are optically scanned and converted into binary data;
c) the outer contour and the inner contours of the character to be recognized are approximated by a polygon whose straight line segments are transformed into tangent space in order to generate character curves and normalized;
d) in order to compare the characters to be recognized with the reference characters in a rotationally invariant fashion, at least the character curve of the outer contour and the reference curves of the outer contours are displaced relative to one another in tangent space until the surface area enclosed between the character curve and the respective reference curve reaches a minimum; and
e) the surface area then determined between the character curves for outer contour and inner contours of the character to be recognized and the respective reference curves for outer contours and inner contours of the reference characters is used as a measure for the deviation between the character and the respective reference character, and that reference character for which this deviation is smallest is determined as recognized, **characterized in that** the total deviations of outer contour and inner contours are used for the purpose of bringing the character curve and the reference curves into congruence in a rotationally invariant fashion.

**2.** Method according to Claim 1, **characterized in that** the reference characters and the characters to be recognized are defined in each case by an outer contour and two inner contours which are compared for the purpose of character recognition, inner contours which may not be present in the case of the respective characters being represented by a straight line in tangent space.

**3.** Method according to one of the preceding claims, **characterized in that** stepwise equalization is applied during the polygonal approximation of the contours of the character to be recognized in order to eliminate corner points of the polygon of little visual relevance.

**4.** Method according to one of the preceding claims, **characterized in that** the polygons of the contours of the reference characters and of the characters to be recognized are decomposed into consecutive alternatively concave and convex polygon curves, **in that** the similarity comparison is carried out separately for the individual polygon curves, and **in that** as a measure for deviation use is made of the sum of the surface areas which are enclosed between the character curves and the respective reference curves of the individual polygon curves.

**Revendications**

**1.** Procédé de reconnaissance optique de caractères alphanumériques, comportant les étapes suivantes :

a) les contours extérieurs et les contours intérieurs polygonaux de caractères de référence, et leur association de position géométrique mutuelle, sont enregistrés dans une banque de données en tant que courbes de référence transformées et normalisées en l'espace tangentiel ;
b) le contour extérieur et les contours intérieurs d'un caractère à reconnaître sont balayés optiquement et convertis en données binaires ;

c) le contour extérieur et les contours intérieurs du caractère à reconnaître sont définis par approximation au moyen d'un polygone, dont les segments droits sont transformés et normalisés en l'espace tangentiel pour la génération de courbes de caractères ;

d) afin de comparer les caractères à reconnaître avec les caractères de référence de façon invariante en rotation, au moins la courbe de caractères du contour extérieur et les courbes de référence des contours intérieurs sont décalées les unes par rapport aux autres dans l'espace tangentiel, jusqu'à ce que la surface incluse entre la courbe de caractères et la courbe de référence respective ait atteint un minimum ;

e) la surface alors définie entre les courbes de caractères pour le contour extérieur et les contours intérieurs du caractère à reconnaître, et les courbes de référence respectives pour les contours extérieurs et les contours intérieurs des caractères de référence, est utilisée en tant que critère pour l'écart entre le caractère et le caractère de référence respectif, et le caractère de référence pour lequel cet écart est le plus petit est défini comme étant reconnu, **caractérisé en ce que** l'ensemble des écarts du contour extérieur et des contours intérieurs est utilisé pour faire coïncider la courbe de caractères et les courbes de référence de façon invariante en rotation.

2. Procédé selon la revendication 1, **caractérisé en ce que** les caractères de référence et les caractères à reconnaître sont respectivement définis par un contour extérieur et deux contours intérieurs, qui sont comparés pour la reconnaissance des caractères, des contours intérieurs éventuellement inexistants des caractères respectifs étant représentés dans l'espace tangentiel par une droite.

3. Procédé selon l'une des revendications précédentes, **caractérisé en ce qu'**une compensation par gradins est utilisée pour l'approximation par polygone des contours du caractère à reconnaître, afin d'éliminer des points d'angle de faible relevance visuelle du tracé polygonal.

4. Procédé selon l'une des revendications précédentes, **caractérisé en ce que** les tracés polygonaux des contours des caractères de référence et des caractères à reconnaître sont décomposés en arcs polygonaux successifs en alternance concaves et convexes, **en ce que** la comparaison de similitude pour les arcs polygonaux individuels est effectuée séparément, et **en ce que** la somme des surfaces incluses entre les courbes de caractères et les courbes de référence respectives des différents arcs polygonaux est utilisée en tant que critère pour l'écart.

a)

b)

**Fig. 1**

a)

b)

**Fig. 2**

Winkel

Rotation

Länge

1

a)

Winkel

Länge

1

b)

Winkel

Länge

1

c)

**Fig. 3**

A1

A4

A2

A3

**Fig. 4**

Aussenkontur

1. Innenkontur

2. Innenkontur

**Fig. 5**